# EUROPEAN PATENT SPECIFICATION

(11) **EP 3 530 987 B1**
(45) Date of publication and mention of the grant of the patent: **12.08.2020**
(21) Application number: 18158363.4
(22) Date of filing: 23.02.2018
(51) Int. Cl.: F16H 57/021, F16H 57/04, F16C 19/46, F16C 19/54, H02K 7/08, F16C 33/46

(54) **ARRANGEMENT COMPRISING AN ELECTRIC MACHINE AND A GEARBOX AND VEHICLE**
ANORDNUNG MIT EINER ELEKTRISCHEN MASCHINE UND EINEM GETRIEBE UND FAHRZEUG
AGENCEMENT COMPRENANT UNE MACHINE ÉLECTRIQUE ET UNE BOÎTE DE VITESSES ET VÉHICULE

(43) Date of publication of application: 28.08.2019
(60) Divisional application: 20175425.6
(73) Proprietor: Valeo Siemens eAutomotive Germany GmbH, 91056 Erlangen (DE)
(72) Inventor: Rottach, Arnim-Sebastian, 91052 Erlangen (DE); Kirchner, Eckhard, 91056 Erlangen (DE)
(74) Representative: Dr. Gassner & Partner mbB

(56) References cited:
- DE-A1-102009 024 830
- DE-A1-102015 105 543
- US-A- 3 435 930
- US-A- 5 341 901

## Description

The present invention relates to an arrangement comprising an electric machine, a gearbox, a shaft attached to a rotor of the electric machine and to the gearbox, a first bearing supporting the shaft between the rotor and a gear of the gearbox and a second bearing supporting an end portion of the shaft. Besides, the invention relates to a vehicle.

Electric machines of such arrangements, particularly when being used as a drive system for an electric vehicle, have to provide high rotation rates in order to realize a sufficient power density with respect to a given mounting space of the arrangement. Therein, axial forces applied to the shaft on a gearbox-side have to be absorbed near a position where the forces are generated, which is typically a position of a spur gear stage of the gearbox. Therein, the support has to withstand high rotation rates as well as axial and radial loads.

It is known to realize the support of the shaft by means of a fixed first ball bearing, which may be considered as a drive end (DE) side bearing, supporting the shaft between the rotor and the gear and a floating second bearing, which may be considered as a non-drive end (NDE) side bearing, supporting the end portion of the shaft.

However, the fixed ball bearing requires to be supported axially by means of the shaft having a shaft shoulder, which leads to a larger radius in the direction towards the rotor than a radius at a mounting position of the first bearing itself. As the shaft has to have a minimum radius at the mounting position of the first bearing for fulfilling rigidity and strength requirements for a given torque, the large radius results in a high circumferential velocity. Components being arranged at a position having the large radius, such as a radial shaft seal, have to be chosen such that they withstand the high circumferential velocity. Particularly, low friction shaft seals have to be used, which are effective only for one specific direction of rotation.

Document US 3 435 930 A discloses a motor having a roller bearing, wherein an elongated inner race for the bearing is fitted tightly on a driven shaft, which is provided with a tapered portion adapted to receive a gear or pulley for driving a machine. The driven shaft is formed with a step portion and a pilot portion. The inner race of a control bearing is disposed on the pilot portion with its outer end in abutment with a hub and its inner end held in mounted position by a nut threaded of the shaft.

It is an object of the invention to provide an improved arrangement comprising an electric machine and a gearbox, particularly allowing an improved shaft geometry. According to the invention, the above object is solved by an arrangement according to claim 1. Further embodiments are laid down in the dependent claims.

The invention is based on the consideration that a large radius of a section of the shaft between the first bearing and the rotor can be omitted by using a floating bearing between the gear and rotor, since a floating bearing does not require a support in axial direction of the shaft. Advantageously, a circumferential velocity of the section can be reduced significantly and components arranged at the section may be chosen such that they have to withstand only the reduced circumferential velocity.

Typically, the electric machine and the gearbox are arranged within the same housing. Thus, the arrangement can be realized as an integrated drive system, particularly for a vehicle. Preferably, the electric machine is configured to provide a rotation rate of 12.000 min⁻¹, preferably 15.000 min⁻¹, more preferably 22.000 min⁻¹, within a non-overloaded operation range. The aforementioned rotation rates allow to achieve the high power densities desired for modern automotive drive systems. In particular, for high efficiency the electric machine is a permanent-magnet synchronous machine or an separately excited DC machine. The shaft may be considered as a main shaft of the arrangement, which couples the electric machine and the gearbox directly. The rotor and/or the gear may be attached to the shaft in a torque-proof manner.

In order to achieve a reduced mounting space, the first bearing may be a needle roller bearing. Furthermore, the needle roller bearing is able to be operated at high rotation rates and to withstand high radial loads. The needle roller bearing may comprise cylindrical roller elements arranged in axial direction of the shaft.

Preferably, the first bearing comprises a split cage with two end parts being mated with each other. This allows the first bearing to be mounted easily without being moved along the shaft.

Furthermore, the first bearing may be arranged in an end shield of the electric machine. The end shield is typically a drive end shield (DE shield) of the electric machine.

Moreover, the first bearing may be arranged in a circumferential groove of the shaft. Preferably, the first bearing is arranged in the groove such that a free space to radial side walls of the groove is provided in axial direction. Furthermore, roller elements of the first bearing may be at least partially extending above the groove in radial direction.

According to the invention, the second bearing is arranged at a gearbox-side end portion of the shaft. Thus, the second bearing is capable of absorbing interlocking forces of the gearbox. The second bearing may be arranged in a housing structure of the gearbox. The arrangement may comprise a lid element covering the shaft and an opening of the housing structure, in which the second bearing is arranged.

Advantageously, a section of the shaft being attached to the second bearing is recessed, particularly having a smaller radius than a radius of a section of the shaft being attached to the first bearing. This allows the second bearing to be smaller than conventional gearbox-side bearings as the smaller radius results in lower circumferential velocities. Preferably, the shaft is braced against the second bearing, particularly by means of the shaft nut.

The arrangement may comprise a third bearing being arranged at an opposite end portion of the shaft. The bearing may be arranged in a non-drive end shield (NDE shield) of the electric machine. The third bearing is preferably a floating bearing, particularly supported by means of a Belleville spring. Furthermore, the second and the third bearing may be arranged in an X-arrangement or in an O-arrangement for an improved support of thrust forces and traction forces.

Moreover, the arrangement may comprise a radial shaft seal arranged between the first bearing and the rotor and configured to seal an air gap of the electric machine from a lubricant inside the gearbox. By preventing the lubricant from intruding into the air gap, drag moments, abrasion and fire hazard because of overheated lubricant are avoided. Because of the floating first bearing, particularly realized by the needle bearing, the radius of the radial shaft seal can be significantly reduced in comparison to conventional arrangements. The radial shaft seal may be attached to jaw arranged at the end shield, in which the first bearing is arranged.

Preferably, the radial shaft seal comprises a spring and a lip being pressed to the shaft by the spring. Thus, low friction seals having a complex lip geometry and being made of expensive material can be avoided. Particularly, the radial shaft seal having the spring is effective independently of the direction of rotation of the shaft. Therein, a transport of the lubricant towards the rotor when being in reverse operation is avoided, which is an undesired feature of low friction seals.

For a lubrication of the first bearing it is preferred that the shaft comprises an axial bore extending from a gearbox-side end of the shaft to a section being attached to the first bearing and at least one radial bore extending from the axial bore into the section allowing a lubricant to leak the shaft for lubing the first bearing. Preferably, the gearbox comprises a guidance element extending partially into the axial bore and being configured to conduct the lubricant into the axial bore.

The lubrication can be improved, when the axial bore comprises an open circumferential contour, particularly a helical contour, extending in axial direction of the shaft and protruding in radial direction into the center of the axial bore. As the open circumferential contour rotates with the shaft, the shaft works as its own pump for transporting the lubricant to the first bearing.

Preferably, the contour is realized by a contour element arranged inside the axial bore. Thus, the contour element can be inserted easily into the axial bore during manufacture of the shaft. Particularly, the contour element is a wire. It may thus have a substantially circular cross-section. Alternatively, the contour element may be a ribbon. Thus, the contour element may have a substantially flat cross-section. The contour element may be made of a polymer and/or a metal. This allows a low-cost fabrication of the contour element, e.g. as a molded part.

All statements referring to the inventive arrangement apply analogously to the inventive vehicle, so that the above-mentioned advantages of the inventive arrangement may be achieved as well.

Further details and advantages of the invention are disclosed in the following, wherein reference is made to the schematic drawings showing:
- Fig. 1: a perspective view of an embodiment of an inventive arrangement comprising an electric machine and a gearbox;
- Fig. 2: a cross-sectional view of the arrangement along a sectional plane II in fig. 1;
- Fig. 3: a detailed cross-sectional view of the main shaft; and
- Fig. 4: a block diagram of an embodiment of an inventive vehicle.

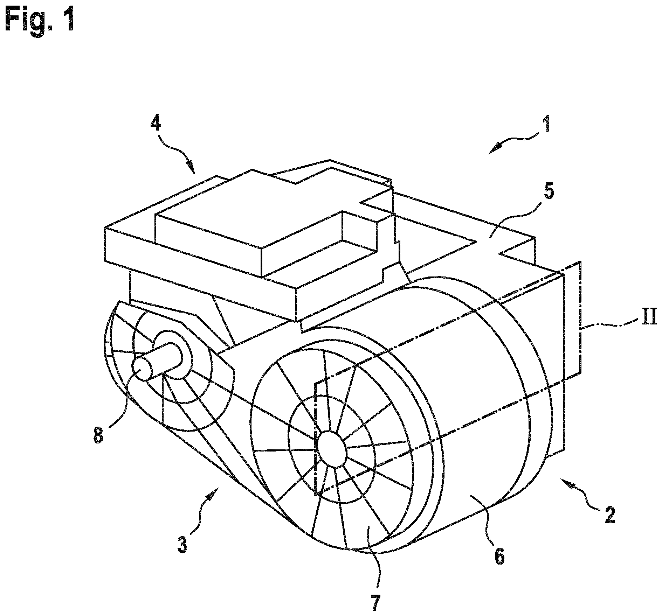

Fig. 1 is a perspective view of an embodiment of an arrangement 1 comprising an electric machine 2 and a gearbox 3. The arrangement 1 is an integrated drive system for a vehicle with high power density, wherein the electric machine 2 is capable of providing rotation rates up to 22.000 min⁻¹ within a non-overloaded operation range.

The arrangement 1 further comprises an inverter 4 configured to supply the electric machine 2 electrically. The electric machine 2, the gearbox 3 and the inverter 4 have a common housing 5 with a machine housing 6 and with a gearbox housing 7. The housing 5 may be realized by a one-part housing, wherein the machine housing 6 and the gearbox housing 7 are corresponding housing sections, or by a two-part or multi-part housing.

The gearbox 3 comprises two side shafts 8, wherein one side shaft is hidden in Fig. 1. The side shafts 8 are coupled by means of the differential gear of the gearbox 3 and are attachable to wheel hubs of the vehicle.

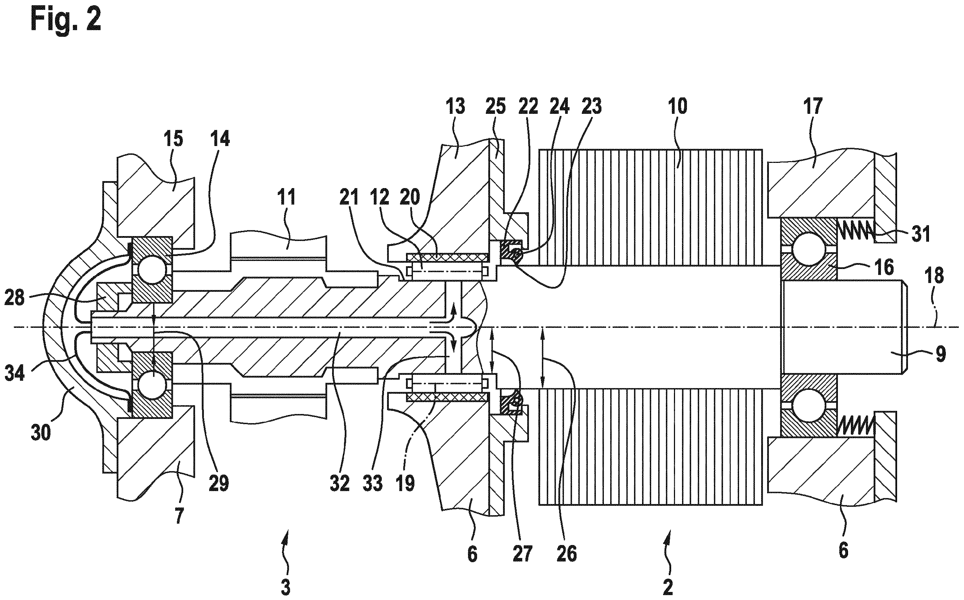

Fig. 2 is a cross-sectional view of the arrangement 1 along a sectional plane II shown in Fig. 1. The arrangement 1 comprises a shaft 9 attached to a rotor 10 of the electric machine 2 and to a gear 11 of the gearbox 3. Thus, the shaft 9 couples the rotor 9 and the gear 11 directly and can be considered as the main shaft of the arrangement 1.

The arrangement 1 further comprises a floating first bearing 12 arranged between the rotor 10 and the gear 11 in a drive end shield 13 (DE shield) of the machine housing 6, a fixed second bearing 14 arranged in a housing structure 15 of the gearbox housing 7 and a floating third bearing 16 arranged in a non-drive end shield 17 (NDE shield) of the machine housing 6. Thus, the bearings 12, 14, 16 realize a hyperstatic support of the shaft 9 being rotatable around a rotation axis 18. Therein, the second bearing 14 and the third bearing 16 support end portions of the shaft 9.

The first bearing 12 is a needle roller bearing having cylindrical roller elements rotatable around respective rotation axes 19 being in parallel to rotation axis 18 of shaft 9. The first bearing 12 comprises a split cage with two end parts being mated with each other. The first bearing 12 is attached to the end shield 13 by means of a bushing 20. Furthermore, the first bearing 12 is arranged in a circumferential groove 21 of the shaft 9, wherein the roller elements extend partially the groove 21 in radial direction. As the first bearing 12 is a floating bearing, it does not have to be supported by the shaft 9. Thus, there is a free space between the first bearing 12 and radial side walls of the groove 21.

Between the first bearing 12 and the rotor 10 a radial shaft seal 22 is provided, which comprises a lip 23 and a spring 24. The radial shaft seal 22 is configured to seal an air gap of the electric machine from a lubricant inside the gearbox 3. Thus, the arrangement 1 is divided into a "wet" side, in which rotating parts of the gearbox 3 of the first bearing 12 and of the second bearing 14 are lubricated, and into a "dry" side comprising the rotor 10 and a stator (not shown) of the electric machine 2. The radial shaft seal 22 is attached to the end shield 13 by means of a jaw 25.

As the first bearing 12 does not have to be supported in axial direction, a radius 26 of a first section, at which the radial shaft seal 22 touches the shaft 9, is only slightly larger than a radius 27 of a second section, at which the first bearing 12 is arranged. Thus, the circumferential velocity of the shaft 9 in the first section is significantly lower in comparison to a conventional shaft 9, which requires a higher difference between the radii 26, 27 in order to support the first bearing 12 in axial direction. Advantageously, a radius and an abrasion of the radial shaft seal 22 is reduced. This allows the usage of the radial shaft seal 22 with the lip 23 and the spring 24 instead of an expensive low friction seal. Particularly, such a low friction seal has different sealing properties for a forward drive mode and a reverse drive mode of the rotor 10 and may even transport the lubricant into the "dry" side when the rotor 10 is driven reversely.

The second bearing 14 is ball roller bearing and braced against the shaft 9 by means of a nut 28. Furthermore, a third section, at which the shaft 9 is attached to the second bearing 14, is recessed and has a smaller radius 29 than the radius 27 of the second section. Thus, the fixed second bearing 14 can be realized significantly smaller than in the conventional case of using a floating bearing. The gearbox-side end of the shaft 9 and an opening, in which the second bearing 14 is arranged, are closed by a lid element 30 being part of the gearbox housing 7.

The floating third bearing 16 is a ball roller bearing, which is supported by means of a Belleville spring 31. Although depicted being in parallel, the bearings 14, 16 may be adjusted against each other, e.g. in an X-arrangement or in an O-arrangement.

The shaft 9 has an axial bore 32 extending from the gearbox-side end to the second section, which is attached to the first bearing 12. Furthermore, the shaft 9 comprises radial bores 33 extending from the axial bore 32 into the second section, therein allowing the lubricant to leak the shaft 9 for lubing the first bearing 12. The gearbox 3 comprises a guidance element 34 extending partially into the axial bore 32 and being configured to conduct the lubricant into the axial bore 32.

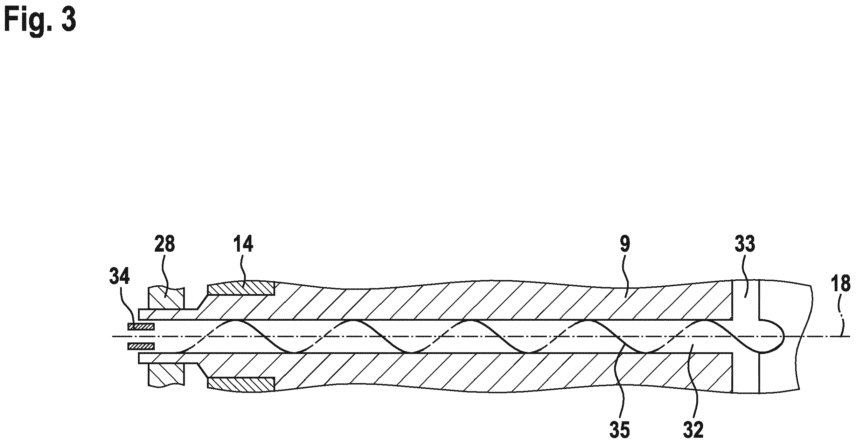

Fig. 3 is a detailed cross-sectional view of the shaft 9. Inside the axial bore 32 the shaft 9 comprises an open circumferential contour, namely a helical contour, extending in axial direction of the shaft 9 and protruding in radial direction into the center of the axial bore 32. The contour is realized by a contour element 35 arranged inside the axial bore 32 and attached to the shaft 9 in a torque proof manner. Thus, when rotating the shaft 9, the contour element 35 transports the lubricant through the axial bore 32. When reaching the radial bores 33 the lubricant is distributed in radial direction by means of the centrifugal force.

The contour element 35 is a wire or a ribbon, alternatively. It is a molding part made of a polymer. Alternatively or additionally, the contour element 35 is made of a metal.

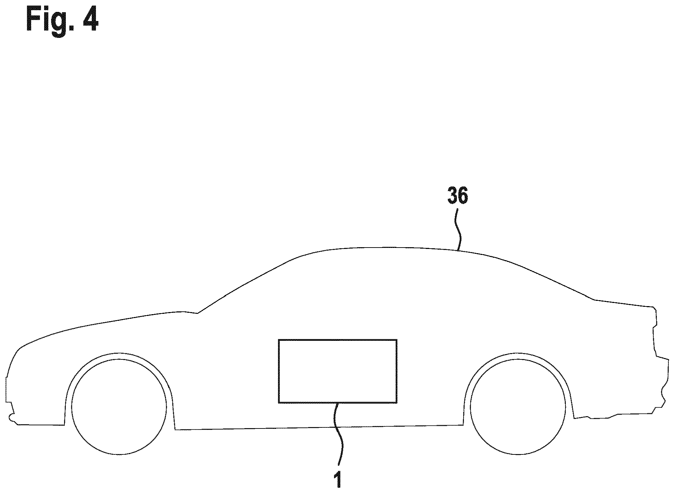

Fig. 4 is a block diagram of an embodiment of a vehicle 36 comprising an arrangement 1 as described afore being configured to drive the vehicle 36.

## Claims

1. Arrangement (1) comprising an electric machine (2), a gearbox (3), a shaft (9) attached to a rotor (10) of the electric machine (2) and to the gearbox (3), a first bearing (12) supporting the shaft (9) between the rotor (10) and a gear (11) of the gearbox (3) attached to the shaft (9) and a second bearing (14) supporting an end portion of the shaft (9),
wherein the first bearing (12) is a floating bearing and the second bearing (14) is a fixed bearing,
**characterized in that**
the second bearing (14) is arranged at a gearbox-side end portion of the shaft (9).

2. Arrangement according to claim 1, wherein the first bearing (12) is a needle roller bearing.

3. Arrangement according to claim 1 or 2, wherein the first bearing (12) comprises a split cage with two end parts being mated with each other.

4. Arrangement according to any of the preceding claims, wherein the first bearing (12) is arranged in a circumferential groove (21) of the shaft (9).

5. Arrangement according to claim 4, wherein roller elements of the first bearing (12) are at least partially extending above the groove (21) in radial direction.

6. Arrangement according to any of the preceding claims, wherein a section of the shaft (9) being attached to the second bearing (14) is recessed, particularly having a smaller radius (29) than a radius (27) of a section of the shaft (9) being attached to the first bearing (12).

7. Arrangement according to any of the preceding claims, wherein the arrangement comprises a third bearing (16) being arranged at an opposite end portion of the shaft (9), wherein the second bearing (14) and the third bearing (16) are arranged in an X-arrangement or in an O-arrangement.

8. Arrangement according to any of the preceding claims, wherein the arrangement comprises a radial shaft seal (22) arranged between the first bearing (12) and the rotor (10) and configured to seal an airgap of the electric machine (2) from a lubricant inside the gearbox (3).

9. Arrangement according to claim 8, wherein the radial shaft seal (22) comprises a spring (24) and a lip (23) being pressed to the shaft by the spring (24).

10. Arrangement according to any of the preceding claims, wherein the shaft (9) comprises an axial bore (32) extending from a gearbox-side end of the shaft (9) to a section being attached to the first bearing (12) and at least one radial bore (33) extending from the axial bore (32) into the section allowing a lubricant to leak the shaft (9) for lubing the first bearing (12).

11. Arrangement according to claim 10, wherein the axial bore (32) comprises an open circumferential contour, particularly a helical contour, extending in axial direction of the shaft (9) and protruding in radial direction into the center of the axial bore (32).

12. Arrangement according to claim 11, wherein the contour is realized by a contour element (35) arranged inside the axial bore (32).

13. Arrangement according to claim 12, wherein the contour element (35) is a wire or a ribbon and/or is made of a polymer and/or a metal.

14. Vehicle (36), comprising an arrangement (1) according to any of claims 1 to 13 being configured to drive the vehicle (36).

## Patentansprüche

1. Anordnung (1), umfassend eine elektrische Maschine (2), ein Getriebe (3), eine an einem Rotor (10) der elektrischen Maschine (2) und an dem Getriebe (3) befestigte Welle (9), ein erstes Lager (12), das die Welle (9) zwischen dem Rotor (10) und einem Zahnrad (11) des an der Welle (9) befestigten Getriebes (3) trägt,
und ein zweites Lager (14), das einen Endabschnitt der Welle (9) trägt,
wobei das erste Lager (12) ein Loslager und das zweite Lager (14) ein Festlager ist,
**dadurch gekennzeichnet, dass**
das zweite Lager (14) an einem getriebeseitigen Endabschnitt der Welle (9) angeordnet ist.

2. Anordnung nach Anspruch 1, wobei das erste Lager (12) ein Nadellager ist.

3. Anordnung nach Anspruch 1 oder 2, wobei das erste Lager (12) einen geteilten Käfig mit zwei zueinander passenden Endteilen umfasst.

4. Anordnung nach einem der vorangehenden Ansprüche, wobei das erste Lager (12) in einer Umfangsnut (21) der Welle (9) angeordnet ist.

5. Anordnung nach Anspruch 4, wobei sich Wälzkörper des ersten Lagers (12) zumindest teilweise oberhalb der Nut (21) in radialer Richtung erstrecken.

6. Anordnung nach einem der vorangehenden Ansprüche, wobei ein Abschnitt der Welle (9), der an dem zweiten Lager (14) befestigt ist, vertieft ist, insbesondere mit einem kleineren Radius (29) als ein Radius (27) eines Abschnitts der Welle (9), der an dem ersten Lager (12) befestigt ist.

7. Anordnung nach einem der vorangehenden Ansprüche, wobei die Anordnung ein drittes Lager (16) umfasst, das an einem gegenüberliegenden Endabschnitt der Welle (9) angeordnet ist, wobei das zweite Lager (14) und das dritte Lager (16) in einer X-Anordnung oder in einer O-Anordnung angeordnet sind.

8. Anordnung nach einem der vorangehenden Ansprüche, wobei die Anordnung eine Radialwellendichtung (22) umfasst, die zwischen dem ersten Lager (12) und dem Rotor (10) angeordnet und zur Abdichtung eines Luftspalts der elektrischen Maschine (2) gegenüber einem Schmiermittel im Inneren des Getriebegehäuses (3) konfiguriert ist.

9. Anordnung nach Anspruch 8, wobei die Radialwellendichtung (22) eine Feder (24) und eine Lippe (23), die durch die Feder (24) an die Welle gedrückt wird, umfasst.

10. Anordnung nach einem der vorangehenden Ansprüche, wobei die Welle (9) eine axiale Bohrung (32) umfasst, die sich von einem getriebeseitigen Ende der Welle (9) zu einem Abschnitt erstreckt, der an dem ersten Lager (12) befestigt ist, und mindestens eine radiale Bohrung (33), die sich von der axialen Bohrung (32) in den Abschnitt erstreckt, der ermöglicht, dass ein Schmiermittel aus der Welle (9) zum Schmieren des ersten Lagers (12) austritt.

11. Anordnung nach Anspruch 10, wobei die Axialbohrung (32) eine offene Umfangskontur, insbesondere eine schraubenförmige Kontur, umfasst, die sich in axialer Richtung der Welle (9) erstreckt und in radialer Richtung in die Mitte der Axialbohrung (32) vorsteht.

12. Anordnung nach Anspruch 11, wobei die Kontur durch ein innerhalb der Axialbohrung (32) angeordnetes Konturelement (35) realisiert ist.

13. Anordnung nach Anspruch 12, wobei das Konturenelement (35) ein Draht oder ein Band ist und/oder aus einem Polymer und/oder einem Metall hergestellt ist.

14. Fahrzeug (36), umfassend eine Anordnung (1) nach einem der Ansprüche 1 bis 13, die zum Antreiben des Fahrzeugs (36) konfiguriert ist.

## Revendications

1. Agencement (1) comprenant une machine électrique (2), une boîte de vitesses (3), un arbre (9) fixé à un rotor (10) de la machine électrique (2) et à la boîte de vitesses (3), un premier palier (12) supportant l'arbre (9) entre le rotor (10) et un pignon (11) de la boîte de vitesses (3) fixé à l'arbre (9) et un deuxième palier (14) supportant une partie d'extrémité de l'arbre (9), en ce que le premier palier (12) est un palier flottant et le deuxième palier (14) est un palier fixe, **caractérisé en ce que** le deuxième palier (14) est disposé au niveau d'une partie d'extrémité côté boîte de vitesses de l'arbre (9).

2. Agencement selon la revendication 1, en ce que le premier palier (12) est un roulement à aiguilles.

3. Agencement selon la revendication 1 ou 2, en ce que le premier palier (12) comprend une cage en deux parties comportant deux parties d'extrémité accouplées l'une à l'autre.

4. Agencement selon l'une des revendications précédentes, en ce que le premier palier (12) est disposé dans une rainure circonférentielle (21) de l'arbre (9).

5. Agencement selon la revendication 4, en ce que des éléments de roulement du premier palier (12) s'étendent au moins partiellement au-dessus de la rainure (21) dans le sens radial.

6. Agencement selon l'une des revendications précédentes, en ce qu'une section de l'arbre (9) fixée au deuxième palier (14) est encastrée, en particulier présente un rayon inférieur (29) à un rayon (27) d'une section de l'arbre (9) fixée au premier palier (12).

7. Agencement selon l'une des revendications précédentes, en ce que l'agencement comprend un troisième palier (16) disposé sur une partie d'extrémité opposée de l'arbre (9), en ce que le deuxième palier (14) et le troisième palier (16) sont disposés dans un agencement en X ou un agencement en O.

8. Agencement selon l'une des revendications précédentes, en ce que l'agencement comprend un joint d'arbre radial (22) disposé entre le premier palier (12) et le rotor (10) et conçu pour étancher un entrefer de la machine électrique (2) d'un lubrifiant à l'intérieur de la boîte de vitesses (3).

9. Agencement selon la revendication 8, en ce que le joint d'arbre radial (22) comprend un ressort (24) et une lèvre (23) qui est pressée sur l'arbre par le ressort (24).

10. Agencement selon l'une des revendications précédentes, en ce que l'arbre (9) comprend un alésage axial (32) s'étendant d'une extrémité côté boîte de vitesses de l'arbre (9) à une section qui est fixée au premier palier (12) et au moins un alésage radial (33) s'étendant de l'alésage axial (32) dans la section permettant à un lubrifiant de fuir de l'arbre (9) pour lubrifier le premier palier (12).

11. Agencement selon la revendication 10, en ce que l'alésage axial (32) comprend un contour circonférentiel ouvert, en particulier un contour hélicoïdal, s'étendant dans un sens axial de l'arbre (9) et faisant saillie dans un sens radial au centre de l'alésage axial (32).

12. Agencement selon la revendication 11, en ce que le contour est réalisé par un élément de contour (35) disposé à l'intérieur de l'alésage axial (32).

13. Agencement selon la revendication 12, en ce que l'élément de contour (35) est un fil ou un ruban et/ou est constitué d'un polymère et/ou d'un métal.

14. Véhicule (36) comprenant un agencement (1) selon l'une des revendications 1 à 13 conçu pour entraîner le véhicule (36).
